# EUROPÄISCHE PATENTSCHRIFT

(11) **EP 3 323 489 B1**
(45) Veröffentlichungstag und Bekanntmachung des Hinweises auf die Patenterteilung: **03.06.2020**
(21) Anmeldenummer: 17200588.6
(22) Anmeldetag: 08.11.2017
(51) Int. Cl.: B01D 33/11, B01D 33/46, B01D 33/76, B04B 7/18, B04B 11/08

(54) **FILTERZENTRIFUGE**
FILTER CENTRIFUGE
FILTRE CENTRIFUGEUSE

(30) Priorität: 21.11.2016 DE 102016122351
(43) Veröffentlichungstag der Anmeldung: 23.05.2018
(73) Patentinhaber: Andritz KMPT GmbH, 85256 Vierkirchen (DE)
(72) Erfinder: GRIM, Gunnar, 85258 Weichs (DE); BOGNER, Alexander, 85253 Großberghofen (DE)
(74) Vertreter: Viering, Jentschura & Partner mbB Patent- und Rechtsanwälte

(56) Entgegenhaltungen:
- DE-B- 1 238 852
- JP-A- 2005 021 852
- US-A- 3 376 978

## Beschreibung

Die vorliegende Erfindung betrifft eine Filterzentrifuge zum Ausfiltern eines Feststoffmaterials aus einer Suspension gemäß dem Oberbegriff des Anspruchs 1 .

Eine wie eingangs genannte Filterzentrifuge ist z.B. aus der JP 2005 021852 A bekannt. Eine weitere Filterzentrifuge ist z.B. aus der US 3 376 978 A bekannt. Filterzentrifugen werden zum Beispiel bei chemischen, pharmazeutischen und biologischen Anwendungen im industriellen Maßstab zur Filtration von Suspensionen (Fest-FlüssigGemischen) eingesetzt.

Als eine Bauform einer herkömmlichen Filterzentrifuge ist zum Beispiel eine diskontinuierliche Schälzentrifuge bekannt. Diese weist eine in einem Gehäuse drehbar gelagerte Filtertrommel auf, welcher mittels einer Suspension-Zuführvorrichtung, welche, zumindest in einem Austragebetrieb, in welchem das ausgefilterte Filtermaterial aus der Filtertrommel ausgetragen wird, in die Filtertrommel hineinragt, eine zu filtrierende Suspension zugeführt wird. Ferner ragt eine Feststoffmaterial-Austragvorrichtung in die Filtertrommel hinein, mittels welcher das ausgefilterte Feststoffmaterial aus der Filtertrommel ausgetragen wird. Ferner weist die Schälzentrifuge an einer Innenwand der Filtertrommel ein Filtermittel auf, zum Beispiel ein Filtertuch, welches zum Ausfiltern des Feststoffmaterials aus der Suspension dient und welches, zum Beispiel mittels Spannmitteln, in der Filtertrommel gehalten ist.

In einem normalen/regulären Filterbetrieb wird der sich drehenden Filtertrommel die zu filtrierende Suspension über die Suspension-Zuführvorrichtung zugeführt. Aufgrund der Drehung der Filtertrommel wird die Suspension radial nach außen zur Innenwand der Filtertrommel und somit zum Filtermittel gedrückt. Die Flüssigkeit der Suspension durchdringt das Filtermittel sowie das daran ausgefilterte Feststoffmaterial und wird aus der Filtertrommel abgeführt bzw. herausgeschleudert (zum Beispiel mittels in der Filtertrommel vorgesehenen Drainagebohrungen oder -löchern). Das ausgefilterte Feststoffmaterial verbleibt als Filterkuchen an dem Filtermittel und wird schließlich, zum Beispiel wenn ein geforderter Trennungsgrad von Flüssigkeit und Feststoffmaterial durch Ausschleudern der Flüssigkeit erreicht ist, in einem Austragebetrieb durch die Feststoffmaterial-Austragvorrichtung, zum Beispiel mittels eines Schälmessers, welches den Filterkuchen abschält, aus der Filtertrommel ausgetragen.

Durch die Erfindung wird eine Filterzentrifuge zum Ausfiltern eines Feststoffmaterials aus einer Suspension geschaffen, die im Hinblick auf ein Austragen des ausgefilterten Feststoffmaterials aus der Filtertrommel verbessert ist.

Hierzu stellt die vorliegende Erfindung eine Filterzentrifuge zum Ausfiltern eines Feststoffmaterials aus einer Suspension gemäß Anspruch 1 bereit. Weitere Ausgestaltungen der erfindungsgemäßen Filterzentrifuge sind in den abhängigen Ansprüchen beschrieben.

Gemäß verschiedenen Aspekten der vorliegenden Erfindung hat eine Filterzentrifuge zum Ausfiltern eines Feststoffmaterials aus einer Suspension, die von dem Feststoffmaterial und einer Flüssigkeit gebildet ist, eine Filtertrommel, welche eine Filtertrommelinnenfläche und eine Filtertrommellängsachse definiert und welche um die Filtertrommellängsachse, zum Beispiel mittels eines Drehantriebs, zum Beispiel in eine Filtertrommelbetriebsdrehrichtung, drehbar ist. Die Filtertrommellängsachse kann zum Beispiel beliebig ausgerichtet/angeordnet sein. Die Filtertrommellängsachse kann zum Beispiel zumindest im Wesentlichen horizontal ausgerichtet/angeordnet sein. Die Filtertrommellängsachse kann zum Beispiel zumindest im Wesentlichen vertikal ausgerichtet/angeordnet sein.

Die Filterzentrifuge hat ferner eine Feststoffmaterial-Austragevorrichtung zum Austragen des ausgefilterten Feststoffmaterials aus der Filtertrommel im Rahmen eines Austragebetriebs der Filterzentrifuge. Die Feststoffmaterial-Austragevorrichtung weist auf einen Austragevorrichtungs-Arm mit einem freien Armende und eine Feststoffmaterial-Austrageleitung, welche an dem Arm ausgebildet ist (z.B. indem sie separat vorgesehen und an dem Arm angebracht ist, oder z.B. indem sie von dem Arm selbst ausgebildet bzw. in diesem integriert ausgebildet ist) und über welche das ausgefilterte Feststoffmaterial (im Austragebetrieb) aus der Filtertrommel herausführbar ist (bzw. herausgeführt wird) und welche eine Feststoffmaterial-Einlassöffnung hat, welche benachbart zu dem freien Armende angeordnet ist und über welche das ausgefilterte Feststoffmaterial (im Austragebetrieb) von der Filtertrommel in die Feststoffmaterial-Austrageleitung gelangen kann. Die Feststoffmaterial-Austrageleitung kann zum Beispiel ein Rohr oder ein Schlauch sein.

Der Austragevorrichtungs-Arm ist, zum Beispiel mittels eines an eine Steuervorrichtung angeschlossenen Antriebs, gesteuert schwenkbar eingerichtet, sodass im Austragebetrieb die Feststoffmaterial-Einlassöffnung mittels einer Schwenkbewegung des Austragevorrichtungs-Arms (z.B. radial) in die Nähe der Filtertrommelinnenfläche bewegbar ist (bzw. bewegt wird), um (im Austragebetrieb) das an der Filtertrommelinnenfläche anhaftende, ausgefilterte Feststoffmaterial aufnehmen zu können.

Die Feststoffmaterial-Austragevorrichtung weist ferner zumindest eine Düse auf, um das ausgefilterte Feststoffmaterial im Austragebetrieb mit einem Gas (z.B. einem unter Druck stehenden bzw. einem Druck-Gas) zu beaufschlagen, welche (Düse) benachbart zu der Feststoffmaterial-Einlassöffnung in der Feststoffmaterial-Austrageleitung angeordnet ist und welche (Düse) eine Gasaustrittsöffnung aufweist, welche im Austragebetrieb in Richtung auf die Filtertrommelinnenfläche ausgerichtet ist, um im Austragebetrieb das an der Filtertrommelinnenfläche anhaftende, ausgefilterte Feststoffmaterial mit dem Gas beaufschlagen zu können.

Die Düse kann im Austragebetrieb zum Beispiel angeordnet sein, sodass das aus der Gasaustrittsöffnung austretende Gas quer (zum Beispiel in einem Winkel von größer/gleich 45° oder größer/gleich 60° oder größer/gleich 75°) zur Filtertrommelinnenfläche, zum Beispiel quer zu einer entsprechenden Tangente der Filtertrommelinnenfläche, aus der Gasaustrittsöffnung austritt. Die Düse kann im Austragebetrieb zum Beispiel angeordnet sein, sodass das aus der Gasaustrittsöffnung austretende Gas zumindest im Wesentlichen orthogonal zur Filtertrommelinnenfläche, zum Beispiel orthogonal zu einer entsprechenden Tangente der Filtertrommelinnenfläche, aus der Gasaustrittsöffnung austritt. Die zumindest eine Düse kann zum Beispiel (direkt oder indirekt) an einer Innenwand der Feststoffmaterial-Austrageleitung befestigt sein, zum Beispiel (indirekt) mittels eines oder mehrerer Befestigungsstege(s), dessen/deren eines Ende an der Düse befestigt ist und dessen/deren anderes Ende an der Innenwand der Feststoffmaterial-Austrageleitung befestigt ist. Das Gas kann zum Beispiel Luft sein. Alternativ kann das Gas zum Beispiel ein Schutzgas sein, zum Beispiel Stickstoff oder Kohlenstoffdioxid oder Argon oder Gemische davon.

Durch die zumindest eine Düse (bzw. durch das mit Gas Beaufschlagen über die Düse) kann zum Beispiel das ausgefilterte Feststoffmaterial im Austragebetrieb umgeformt und zum Beispiel zumindest im Wesentlichen vollständig von der Filtertrommelinnenfläche (bzw. von einem/dem daran anliegenden/angeordneten Filtermedium) abgelöst werden. Dadurch kann zum Beispiel das ausgefilterte Feststoffmaterial zumindest im Wesentlichen vollständig aus der Filtertrommel ausgetragen werden, und ein Austragen des ausgefilterten Feststoffmaterials aus der Filtertrommel kann verbessert sein.

Die Filterzentrifuge weist ferner auf eine Druckdifferenz-Erzeugungsvorrichtung zum Erzeugen einer Druckdifferenz zwischen einem Inneren der Düse und der Feststoffmaterial-Einlassöffnung, derart dass (im Austragebetrieb) der Druck in der Düse größer ist als an (bzw. in) der Feststoffmaterial-Einlassöffnung, und zum Erzeugen einer Druckdifferenz zwischen der Feststoffmaterial-Einlassöffnung und einem Inneren der Feststoffmaterial-Austrageleitung, derart dass (im Austragebetrieb) der Druck in der Feststoffmaterial-Austrageleitung kleiner ist als an der Feststoffmaterial-Einlassöffnung bzw. als in einer/der äußeren Umgebung der Feststoffmaterial-Einlassöffnung.

Die Druckdifferenz zwischen einem/dem Inneren der Düse und der Feststoffmaterial-Einlassöffnung kann zum Beispiel erzeugt werden durch mit Druck Beaufschlagen des Inneren der Düse und/oder durch mit Vakuum Beaufschlagen der Feststoffmaterial-Einlassöffnung. Die Druckdifferenz zwischen der Feststoffmaterial-Einlassöffnung und einem/dem Inneren der Feststoffmaterial-Austrageleitung kann zum Beispiel erzeugt werden durch mit Druck Beaufschlagen der/einer die Feststoffmaterial-Einlassöffnung umgebenden äußeren Umgebung und/oder durch mit Vakuum Beaufschlagen des Inneren der Feststoffmaterial-Austrageleitung. Die Druckdifferenz-Erzeugungsvorrichtung kann zum Beispiel einen oder mehrere Kompressor(en) und/oder eine oder mehrere Vakuumpumpe(n) aufweisen. Die Druckdifferenz-Erzeugungsvorrichtung (bzw. deren Kompressor(en) und/oder deren Vakuumpumpe(n)) kann zum Beispiel von einer/der Steuervorrichtung gesteuert sein, um die oben beschriebenen Druckdifferenzen zu erzeugen bzw. einzustellen. Das Innere der Düse kann zum Beispiel mit einem Druck von 2 bar oder 4 bar oder 6 bar beaufschlagt werden, zum Beispiel mittels eines/des Kompressors. Das Austragen des ausgefilterten Feststoffmaterials aus der Filtertrommel kann zum Beispiel durch die Druckdifferenz zwischen der/einer die Feststoffmaterial-Einlassöffnung umgebenden äußeren Umgebung und einem/dem Inneren der Feststoffmaterial-Austrageleitung bewirkt sein. Durch die Druckdifferenz zwischen (der äußeren Umgebung) der Feststoffmaterial-Einlassöffnung und einem/dem Inneren der Feststoffmaterial-Austrageleitung kann das ausgefilterte Feststoffmaterial zum Beispiel aus der Filtertrommel ausgesaugt werden. Durch die Druckdifferenz zwischen der Feststoffmaterial-Einlassöffnung und einem/dem Inneren der Feststoffmaterial-Austrageleitung kann zum Beispiel das ausgefilterte Feststoffmaterial in die Feststoffmaterial-Austrageleitung eingesaugt werden.

Durch die Druckdifferenz zwischen (der äußeren Umgebung) der Feststoffmaterial-Einlassöffnung und einem/dem Inneren der Feststoffmaterial-Austrageleitung kann zum Beispiel ein Gasstrom an (bzw. in) der Feststoffmaterial-Einlassöffnung und/oder an (bzw. in) einem Bereich, der benachbart zu der Feststoffmaterial-Einlassöffnung ist, erzeugt werden. Dadurch kann das von der Düse (bzw. das durch mit Gas Beaufschlagen über die Düse) im Austragebetrieb umgeformte bzw. abgelöste Feststoffmaterial fluidisiert und in die Feststoffmaterial-Austrageleitung eingesaugt werden, wodurch ein Austragen des ausgefilterten Feststoffmaterials aus der Filtertrommel verbessert sein kann.

Die Druckdifferenz-Erzeugungsvorrichtung kann zum Beispiel eingerichtet sein, um das ausgefilterte Feststoffmaterial im Austragebetrieb über die Düse in Intervallen (bzw. portionsweise), zum Beispiel periodisch, mit (Druck-)Gas zu beaufschlagen. Alternativ kann die Druckdifferenz-Erzeugungsvorrichtung zum Beispiel eingerichtet sein, um das ausgefilterte Feststoffmaterial im Austragebetrieb über die Düse konstant mit (Druck-)Gas zu beaufschlagen. Die Druckdifferenz-Erzeugungsvorrichtung kann zum Beispiel von einer/der Steuervorrichtung (der Filterzentrifuge) gesteuert sein, um das ausgefilterte Feststoffmaterial im Austragebetrieb über die Düse wie oben beschrieben mit Gas zu beaufschlagen.

Die Druckdifferenz-Erzeugungsvorrichtung ist ferner derart eingerichtet, dass von ihr im Austragebetrieb die besagten Druckdifferenzen derart eingestellt sind (bzw. werden), dass der (Gas-)Volumenstrom in (bzw. an) der Gasaustrittsöffnung kleiner ist als der (Gas-)Volumenstrom in (bzw. an) der Feststoffmaterial-Einlassöffnung. Das heißt, die Druckdifferenz-Erzeugungsvorrichtung ist derart eingerichtet, dass von ihr im Austragebetrieb die besagten Druckdifferenzen derart eingestellt sind (bzw. werden), dass der (Gas-)Volumenstrom im Inneren der Düse kleiner ist als der (Gas-)Volumenstrom im Inneren der Feststoffmaterial-Austrageleitung. Die Druckdifferenz-Erzeugungsvorrichtung kann zum Beispiel von einer/der Steuervorrichtung gesteuert sein, um die oben beschriebenen (Gas-)Volumenströme zu erzeugen bzw. einzustellen.

Indem der (Gas-)Volumenstrom in (bzw. an) der Gasaustrittsöffnung (bzw. im Inneren der Düse) kleiner ist als der (Gas-)Volumenstrom in (bzw. an) der Feststoffmaterial-Einlassöffnung (bzw. im Inneren der Feststoffmaterial-Austrageleitung), kann zum Beispiel das von der Düse (bzw. das durch mit Gas Beaufschlagen über die Düse) im Austragebetrieb umgeformte bzw. abgelöste Feststoffmaterial zumindest im Wesentlichen vollständig in die Feststoffmaterial-Austrageleitung eingesaugt werden, wodurch ein Austragen des ausgefilterten Feststoffmaterials aus der Filtertrommel verbessert sein kann.

Optional kann die zumindest eine Düse zumindest im Wesentlichen zentral bezüglich der Feststoffmaterial-Einlassöffnung an (z.B. in) dieser angeordnet sein, sodass die Gasaustrittsöffnung zumindest im Wesentlichen zentral bezüglich der Feststoffmaterial-Einlassöffnung angeordnet ist.

Optional kann die Feststoffmaterial-Austragevorrichtung ferner eine Gaszuführleitung aufweisen, über welche der zumindest einen Düse das Gas zugeführt wird und welche mit der zumindest einen Düse verbunden ist und welche bezüglich eines Querschnitts der Feststoffmaterial-Austrageleitung zumindest im Wesentlichen zentral in der Feststoffmaterial-Austrageleitung angeordnet sein kann.

Optional kann die Feststoffmaterial-Austrageleitung einen trichterförmigen Feststoffmaterial-Aufnahmeabschnitt aufweisen, welcher sich zur Feststoffmaterial-Einlassöffnung hin trichterförmig vergrößert und in dieser ausmündet, wobei optional die zumindest eine Düse bezüglich eines Querschnitts des Feststoffmaterial-Aufnahmeabschnitt zumindest im Wesentlichen zentral in dem Feststoffmaterial-Aufnahmeabschnitt angeordnet sein kann.

Die Feststoffmaterial-Einlassöffnung erstreckt sich in Richtung der Filtertrommellängsachse über weniger als ein Fünftel, zum Beispiel weniger als ein Zehntel, der gesamten Länge der Filtertrommelinnenfläche, wobei der Austragevorrichtungs-Arm ferner, zum Beispiel mittels eines/des an eine/die Steuervorrichtung angeschlossenen Antriebs, gesteuert translatorisch (in Richtung der Filtertrommellängsachse) bewegbar eingerichtet ist, sodass im Austragebetrieb die Feststoffmaterial-Einlassöffnung mittels einer translatorischen Bewegung des Austragevorrichtungs-Arms in Richtung parallel zur Filtertrommellängsachse bewegbar ist, um die Feststoffmaterial-Einlassöffnung parallel zur Filtertrommellängsachse zu verschieben.

Optional kann der Austragevorrichtungs-Arm ein Hohlkörper mit einem inneren Hohlraum sein und die Feststoffmaterial-Austrageleitung kann von dem Hohlraum des Hohlkörpers gebildet sein. Der Hohlkörper kann zum Beispiel ein stangenförmiges hohles Rohr sein, von dessen hohlem Inneren die Feststoffmaterial-Austrageleitung gebildet ist/wird.

Der Austragevorrichtungs-Arm ist um eine im Abstand zum freien Armende angeordnete Schwenkachse schwenkbar, welche zumindest im Wesentlichen parallel zur Filtertrommellängsachse und versetzt dazu ist. Der Austragevorrichtungs-Arm ist , zum Beispiel mittels eines/des an die Steuervorrichtung angeschlossenen Antriebs, um die Schwenkachse schwenkbar bzw. kann um diese geschwenkt werden, um die Feststoffmaterial-Einlassöffnung, zum Beispiel im Austragebetrieb, in die Nähe der Filtertrommelinnenfläche zu bewegen.

Optional kann die Filtertrommellängsachse zumindest im Wesentlichen horizontal angeordnet sein, wobei im Austragebetrieb die in die Nähe der Filtertrommelinnenfläche bewegte Feststoffmaterial-Einlassöffnung bezüglich der Filtertrommellängsachse im unteren Drittel der Filtertrommel angeordnet sein kann.

Beispielgebende, aber nicht einschränkende Ausführungsformen der vorliegenden Erfindung sind in den Figuren dargestellt und werden im Folgenden näher erläutert.

Es zeigen:
Figur 1 eine vereinfachte, schematische Ansicht einer Filtertrommel und einer Feststoffmaterial-Austragevorrichtung einer Filterzentrifuge gemäß einer ersten Ausführungsform der vorliegenden Erfindung.
Figur 2 eine vereinfachte, schematische, geschnittene Ansicht eines Abschnitts einer Filtertrommel und einer Feststoffmaterial-Austragevorrichtung einer Filterzentrifuge gemäß der ersten Ausführungsform der vorliegenden Erfindung.
Figur 3 eine vereinfachte, schematische, geschnittene Ansicht eines Abschnitts einer Filtertrommel und einer Feststoffmaterial-Austragevorrichtung einer Filterzentrifuge gemäß einer zweiten Ausführungsform der vorliegenden Erfindung.
Figur 4 eine vereinfachte, schematische, teilweise geschnittene Ansicht einer Filtertrommel und einer Feststoffmaterial-Austragevorrichtung einer Filterzentrifuge gemäß der ersten Ausführungsform der vorliegenden Erfindung.
Figur 5 eine vereinfachte, schematische, teilweise geschnittene Ansicht einer Filterzentrifuge gemäß der ersten Ausführungsform der vorliegenden Erfindung.

In den Figuren sind identische oder ähnliche Elemente mit identischen Bezugszeichen versehen, soweit dies zweckmäßig ist.

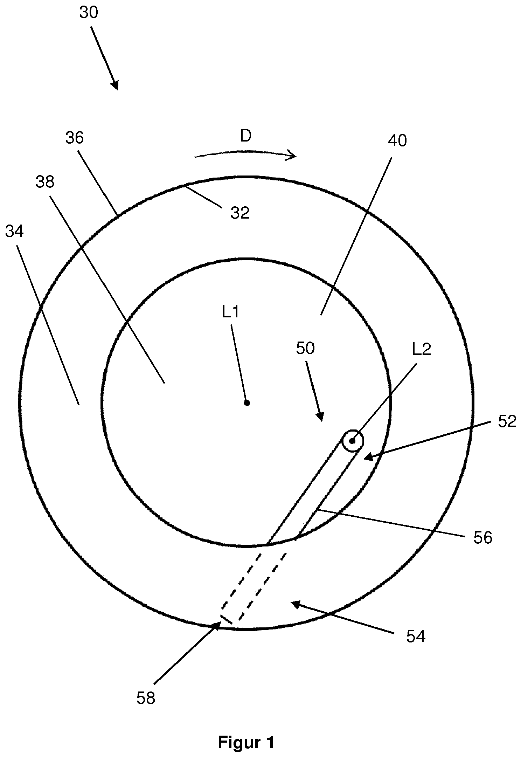

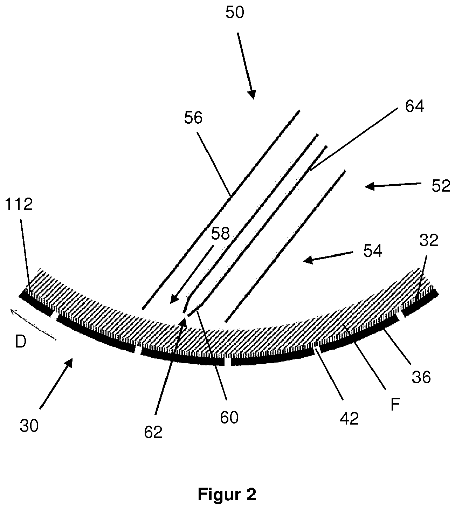

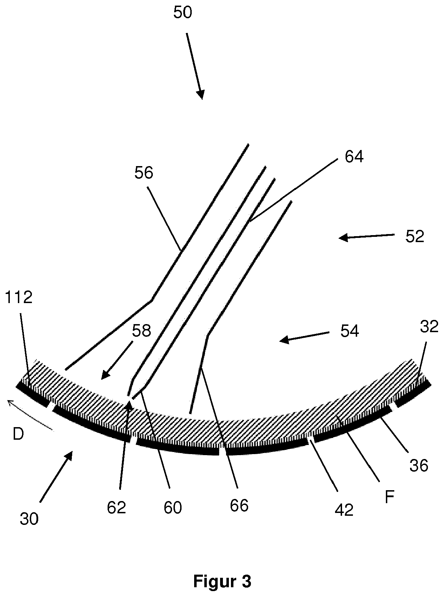

Wie in den Figuren 1-5 gezeigt weisen Filterzentrifugen 10 zum Ausfiltern eines Feststoffmaterials F aus einer Suspension, die von dem Feststoffmaterial F und einer Flüssigkeit gebildet ist, gemäß den verschiedenen Ausführungsformen der Erfindung auf eine Filtertrommel 30, welche eine Filtertrommelinnenfläche 32 und eine Filtertrommellängsachse L1 definiert und welche um die Filtertrommellängsachse L1, zum Beispiel mittels eines Drehantriebs 70, zum Beispiel in eine Filtertrommelbetriebsdrehrichtung D, drehbar ist, und eine Feststoffmaterial-Austragevorrichtung 50 zum Austragen des ausgefilterten Feststoffmaterials F aus der Filtertrommel 30 im Rahmen eines Austragebetriebs der Filterzentrifuge 10, wobei die Feststoffmaterial-Austragevorrichtung 50 aufweist einen Austragevorrichtungs-Arm 52 mit einem freien Armende 54, und eine Feststoffmaterial-Austrageleitung 56, welche an dem Arm 52 angebracht ist und über welche das ausgefilterte Feststoffmaterial F aus der Filtertrommel 30 herausführbar ist (bzw. herausgeführt wird) und welche eine Feststoffmaterial-Einlassöffnung 58 hat, welche benachbart zu dem freien Armende 54 angeordnet ist und über welche das ausgefilterte Feststoffmaterial F von der Filtertrommel 30 in die Feststoffmaterial-Austrageleitung 56 gelangen kann, wobei der Austragevorrichtungs-Arm 52 gesteuert bewegbar (zum Beispiel schwenkbar) eingerichtet ist, sodass im Austragebetrieb die Feststoffmaterial-Einlassöffnung 58 mittels einer Bewegung (zum Beispiel Schwenkbewegung) des Austragevorrichtungs-Arms 52 radial in die Nähe der Filtertrommelinnenfläche 32 bewegbar ist (zum Beispiel bewegt wird), um das an der Filtertrommelinnenfläche 32 anhaftende, ausgefilterte Feststoffmaterial F aufnehmen zu können, und wobei die Feststoffmaterial-Austragevorrichtung 50 ferner zumindest eine Düse 60 aufweist, um das ausgefilterte Feststoffmaterial F im Austragebetrieb mit einem Gas (zum Beispiel mit Luft oder mit einem Schutzgas) zu beaufschlagen, welche (Düse) benachbart zu der Feststoffmaterial-Einlassöffnung 58 in der Feststoffmaterial-Austrageleitung 56 angeordnet ist und welche (Düse) eine Gasaustrittsöffnung 62 aufweist, welche im Austragebetrieb in Richtung auf die Filtertrommelinnenfläche 32 ausgerichtet ist, um im Austragebetrieb das an der Filtertrommelinnenfläche 32 anhaftende, ausgefilterte Feststoffmaterial F mit dem Gas beaufschlagen zu können. Die zumindest eine Düse 60 kann zum Beispiel an der Feststoffmaterial-Austrageleitung 56 befestigt sein, zum Beispiel mittels Schweißens oder Klebens. Lösbare Befestigungen, zum Beispiel mittels Schrauben, oder andere nichtlösbare Befestigungen, zum Beispiel mittels Nieten, sind aber auch möglich. Die Düse kann im Austragebetrieb zum Beispiel angeordnet sein, sodass das aus der Gasaustrittsöffnung austretende Gas quer bezüglich einer entsprechenden Tangente der Filtertrommelinnenfläche aus der Gasaustrittsöffnung austritt (siehe Figuren 2 und 3).

Die Filtertrommellängsachse L1 kann beliebig angeordnet sein/werden, zum Beispiel zumindest im Wesentlichen horizontal (Horizontal-Filterzentrifuge) oder zumindest im Wesentlichen vertikal (Vertikal-Filterzentrifuge). Figur 1 zeigt hier zum Beispiel eine Seitenansicht einer Filtertrommel 30 und einer Feststoffmaterial-Austragevorrichtung 50 einer Horizontal-Filterzentrifuge. Alternativ könnte Figur 1 eine Draufsicht einer Filtertrommel 30 und einer Feststoffmaterial-Austragevorrichtung 50 einer Vertikal-Filterzentrifuge zeigen. Wenn die Filtertrommellängsachse L1 zumindest im Wesentlichen horizontal angeordnet ist, kann im Austragebetrieb die in die Nähe der Filtertrommelinnenfläche 32 bewegte Feststoffmaterial-Einlassöffnung 58 bezüglich der Filtertrommellängsachse L1 im unteren Drittel der Filtertrommel 30 angeordnet sein (siehe Figuren 1-3).

Die zumindest eine Düse 60 kann zumindest im Wesentlichen zentral bezüglich der Feststoffmaterial-Einlassöffnung 58 an dieser angeordnet sein, sodass die Gasaustrittsöffnung 62 zumindest im Wesentlichen zentral bezüglich der Feststoffmaterial-Einlassöffnung 58 angeordnet ist (siehe Figuren 2 und 3). Die zumindest eine Düse 60 kann zum Beispiel mittels eines oder mehrerer (in den Figuren nicht gezeigter) Befestigungsstege an der Feststoffmaterial-Austrageleitung 56 befestigt sein, deren eines Ende an der Düse 60 befestigt ist und deren anderes Ende an (einer/der Innenwand) der Feststoffmaterial-Austrageleitung 56 befestigt ist. Die Befestigungsstege können zum Beispiel mittels Schweißens oder Klebens an der Düse 60 bzw. der Feststoffmaterial-Austrageleitung 56 befestigt sein. Lösbare Befestigungen, zum Beispiel mittels Schrauben, oder andere nichtlösbare Befestigungen, zum Beispiel mittels Nieten, sind aber auch möglich. Die Feststoffmaterial-Austrageleitung 56 und die Düse 60 können auch zum Beispiel stofflich einstückig (integral) hergestellt sein.

Die Feststoffmaterial-Austragevorrichtung 50 kann ferner eine Gaszuführleitung 64 aufweisen, über welche der zumindest einen Düse 60 das Gas zugeführt wird und welche mit der zumindest einen Düse 60 verbunden ist. Die Gaszuführleitung 64 kann optional bezüglich eines Querschnitts der Feststoffmaterial-Austrageleitung 56 zumindest im Wesentlichen zentral in der Feststoffmaterial-Austrageleitung 56 angeordnet sein (siehe Figuren 2 und 3). Die Gaszuführleitung 64 kann zum Beispiel wie oben für die zumindest eine Düse 60 beschrieben an der Feststoffmaterial-Austrageleitung 56 befestigt sein.

Die Feststoffmaterial-Austrageleitung 56 kann einen trichterförmigen Feststoffmaterial-Aufnahmeabschnitt 66 aufweisen, welcher sich zur Feststoffmaterial-Einlassöffnung 58 hin trichterförmig vergrößert und in dieser ausmündet, wobei optional die zumindest eine Düse 60 bezüglich eines Querschnitts des Feststoffmaterial-Aufnahmeabschnitts 66 zumindest im Wesentlichen zentral in dem Feststoffmaterial-Aufnahmeabschnitt 66 angeordnet sein kann (siehe Figur 3).

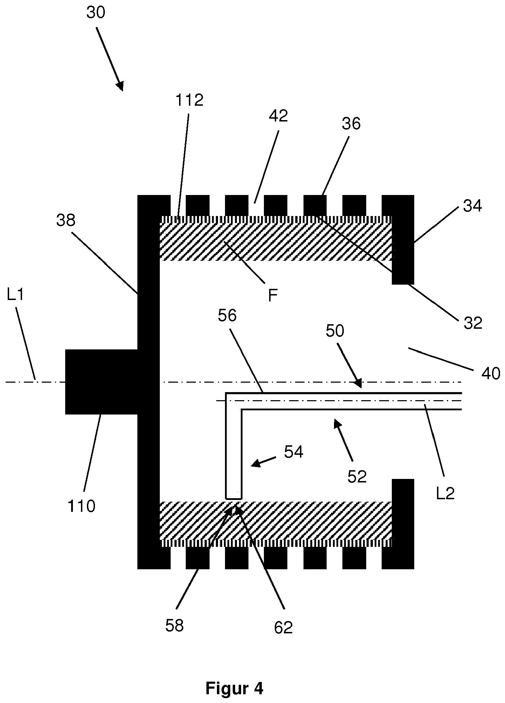

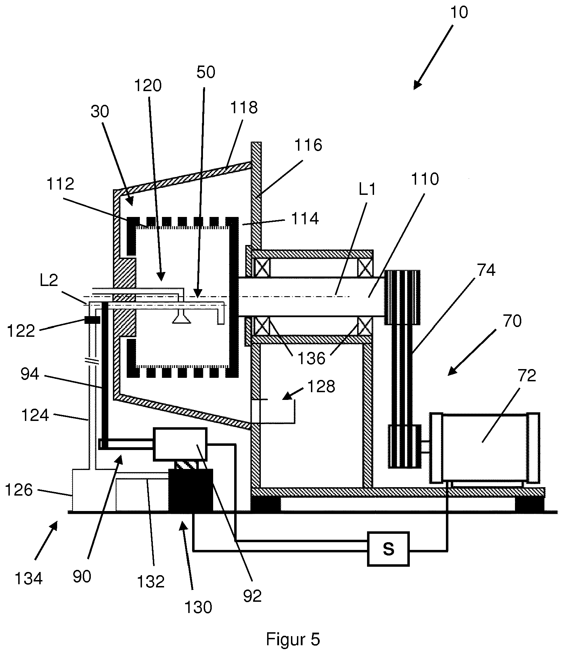

Die Feststoffmaterial-Einlassöffnung 58 kann sich in Richtung der Filtertrommellängsachse L1 über zum Beispiel maximal 5-10% der gesamten Länge der Filtertrommelinnenfläche 32 erstrecken (siehe Figuren 4 und 5), wobei der Austragevorrichtungs-Arm 52 ferner, zum Beispiel mittels eines/des unten erläuterten Antriebs 90, gesteuert translatorisch (entlang der Filtertrommellängsachse L1) bewegbar eingerichtet ist, sodass im Austragebetrieb die Feststoffmaterial-Einlassöffnung 58 mittels einer translatorischen Bewegung des Austragevorrichtungs-Arms 52 in Richtung parallel zur Filtertrommellängsachse L1 bewegbar ist (bzw. bewegt wird), um die Feststoffmaterial-Einlassöffnung 58 parallel zur Filtertrommellängsachse L1 zu verschieben.

Die Filterzentrifugen 10 gemäß den verschiedenen Ausführungsformen der Erfindung können ferner aufweisen eine Druckdifferenz-Erzeugungsvorrichtung 130 zum Erzeugen einer Druckdifferenz zwischen einem Inneren der Düse 60 und der Feststoffmaterial-Einlassöffnung 58, derart dass der Druck in der Düse 60 größer ist als an/in der Feststoffmaterial-Einlassöffnung 58, und zum Erzeugen einer Druckdifferenz zwischen der Feststoffmaterial-Einlassöffnung 58 und einem Inneren der Feststoffmaterial-Austrageleitung 56, derart dass der Druck in der Feststoffmaterial-Austrageleitung 56 kleiner ist als in der die Feststoffmaterial-Einlassöffnung 58 umgebenden äußeren Umgebung. Die Druckdifferenz-Erzeugungsvorrichtung 130 kann derart eingerichtet sein, dass von ihr im Austragebetrieb die besagten Druckdifferenzen derart eingestellt sind, dass der Volumenstrom in/an der Gasaustrittsöffnung 62 kleiner ist als der Volumenstrom in/an der Feststoffmaterial-Einlassöffnung 58. Dazu kann die Düse 60 von der Druckdifferenz-Erzeugungsvorrichtung 130, zum Beispiel in Intervallen (portionsweise) oder kontinuierlich, mit Druck beaufschlagt sein/werden, zum Beispiel mit einem Druck zwischen 2 bar und 6 bar, und das Innere der Feststoffmaterial-Austrageleitung 56 kann von der Druckdifferenz-Erzeugungsvorrichtung 130, zum Beispiel kontinuierlich, mit Vakuum beaufschlagt sein/werden. Durch das mit Druck Beaufschlagen der Düse 60 kann (im Austragebetrieb) ein Gasstrom vom Inneren der Düse 60 durch die Gasaustrittsöffnung 62 in ein Inneres der Filtertrommel 30 (zum Beispiel zur Filtertrommelinnenfläche 32 hin) erzeugt sein/werden (d.h., es kann ein Gasstrom in/an der Gasaustrittsöffnung 62 erzeugt sein/werden), und durch das mit Vakuum beaufschlagen des Inneren der Feststoffmaterial-Austrageleitung 56 kann (im Austragebetrieb) ein Gasstrom von einem Inneren der Filtertrommel 30 (zum Beispiel von der Filtertrommelinnenfläche 32) durch die Feststoffmaterial-Einlassöffnung 58 in das Innere der Feststoffmaterial-Austrageleitung 56 erzeugt sein/werden (d.h., es kann ein Gasstrom in/an der Feststoffmaterial-Einlassöffnung 58 erzeugt sein/werden). Durch Einstellen bzw. Steuern des Drucks bzw. des Vakuums (zum Beispiel mittels einer/der unten erläuterten Steuervorrichtung S) können die Geschwindigkeiten der besagten Gasströme (Gasstrom in/an der Gasaustrittsöffnung 62 und Gasstrom in/an der Feststoffmaterial-Einlassöffnung 58) eingestellt bzw. gesteuert sein/werden, wobei durch die Geschwindigkeiten der besagten Gasströme die besagten Volumenströme eingestellt bzw. gesteuert sein/werden können.

In der in Figur 5 gezeigten Ausführungsform weist die Druckdifferenz-Erzeugungsvorrichtung 130 eine Vakuumpumpe und einen Kompressor auf. Mittels der Vakuumpumpe wird hier das Innere der Feststoffmaterial-Austrageleitung 56 mit Vakuum beaufschlagt und mittels des Kompressors wird hier das Innere der Düse 60 mit Druck beaufschlagt. Die in Figur 5 gezeigte (Horizontal-)Filterzentrifuge 10 weist ferner eine Feststoffmaterial-Sammelvorrichtung 134 auf, über welche die Druckdifferenz-Erzeugungsvorrichtung 130 mit der Feststoffmaterial-Austragevorrichtung 50 verbunden ist. Die Feststoffmaterial Sammelvorrichtung 134 hat hier eine Feststoffmaterial-Leitung 124, ein Verbindungsstück 122, einen Feststoffmaterial-Sammelbehälter 126 und eine Verbindungsleitung 132. Im Inneren der Feststoffmaterial-Leitung 124, des Feststoffmaterial-Sammelbehälters 126 und der Verbindungsleitung 132 verläuft hier eine (nicht gezeigte) Gasleitung. Das Verbindungsstück 122 ist hier mit einem Ende der Feststoffmaterial-Leitung 124 und mit einem Ende der (nicht gezeigten) Gasleitung verbunden und kann an die Feststoffmaterial-Austragevorrichtung 50 angeschlossen sein. Ein anderes Ende der (nicht gezeigten) Gasleitung ist an den Kompressor der Druckdifferenz-Erzeugungsvorrichtung 130 angeschlossen. Ein anderes Ende der Feststoffmaterial-Leitung 124 ist an den Feststoffmaterial-Sammelbehälter 126 angeschlossen. Ein Ende der Verbindungsleitung 132 ist an den Feststoffmaterial-Sammelbehälter 126 angeschlossen und ein anderes Ende der Verbindungsleitung 132 ist an die Vakuumpumpe der Druckdifferenz-Erzeugungsvorrichtung 130 angeschlossen. Wenn das Verbindungsstück 122 an die Feststoffmaterial-Austragevorrichtung 50 angeschlossen ist, ist die Feststoffmaterial-Austrageleitung 56 mit der Feststoffmaterial-Leitung 124 verbunden und die mit der Düse 60 verbundene Gaszuführleitung 64 ist mit der (nicht gezeigten) Gasleitung verbunden. Dadurch kann das Innere der Feststoffmaterial-Austrageleitung 56 mit dem von der Vakuumpumpe erzeugten Vakuum beaufschlagt werden und das Innere der Düse 60 kann mit dem von dem Kompressor erzeugten Druck beaufschlagt werden. Alternativ zu der oben beschriebenen Ausführungsform kann die (nicht gezeigte) Gasleitung zum Beispiel außerhalb der Feststoffmaterial-Leitung 124, des Feststoffmaterial-Sammelbehälters 126 und der Verbindungsleitung 132 verlaufen, und kann zum Beispiel durch eine Wand der Feststoffmaterial-Austrageleitung 56 hindurch geführt sein, um mit der Düse 60 bzw. der Gaszuführleitung 64 verbunden zu sein.

Die Filterzentrifugen 10 gemäß den verschiedenen Ausführungsformen der Erfindung können ferner eine Steuervorrichtung S aufweisen, weiche mit der Druckdifferenz-Erzeugungsvorrichtung 130 verbunden ist. Die Steuervorrichtung S kann zum Beispiel eingerichtet sein, um die Druckdifferenz-Erzeugungsvorrichtung 130 so zu steuern, dass die oben beschriebenen Druckdifferenzen und/oder Volumenströme erzeugt bzw. eingestellt sind/werden.

Die Filtertrommeln 30 der Filterzentrifugen 10 gemäß den verschiedenen Ausführungsformen der Erfindung weisen zum Beispiel auf einen Trommelmantel 36, welcher eine hohlzylindrische Form hat, einen Trommelboden 38, welcher an einem axialen Ende des Trommelmantels 36 (zum Beispiel in Figur 4 an einem linken Ende des Trommelmantels 36) mit diesem verbunden ist und dieses Ende des Trommelmantels 36 verschließt, und einen Trommelkragen 34, welcher an dem anderen (bzw. gegenüberliegenden) axialen Ende des Trommelmantels 36 (zum Beispiel in Figur 4 an einem rechten Ende des Trommelmantels 36) mit diesem verbunden ist und welcher eine zentrale Öffnung 40 aufweist. Der Trommelmantel 36 hat mehrere radiale Drainagebohrungen bzw. -löcher 42, durch die die Flüssigkeit der Suspension in einem regulären Filterbetrieb aus der Filtertrommel 30 abgeführt bzw. herausgeschleudert wird. Die Filtertrommelinnenfläche 32 ist zum Beispiel von einer der Filtertrommellängsachse L1 zugewandten (Innen-)Fläche des (hohlzylindrischen) Trommelmantels 36 gebildet. Die Filterzentrifugen 10 können ferner eine Antriebswelle 110 aufweisen, welche an einer zentralen Position des Trommelbodens 38 mit diesem verbunden ist, sodass eine von der Antriebswelle 110 definierte Wellenachse zumindest im Wesentlichen deckungsgleich mit der Filtertrommellängsachse L1 ist. Die Filterzentrifugen 10 können ferner ein Filtermedium 112 (zum Beispiel ein Filtertuch, welches aus einem Gewebematerial hergestellt ist) aufweisen, welches in die Filtertrommel 30 an die Filtertrommelinnenfläche 32 anliegend eingesetzt ist, sodass die Drainagebohrungen bzw. -löcher 42 vollständig von dem Filtermedium 112 abgedeckt sind. Das Filtermedium 112 ist dazu eingerichtet, das Feststoffmaterial F aus der zu filtrierenden Suspension zurückzuhalten bzw. auszufiltern und die Flüssigkeit der zu filtrierenden Suspension durchzulassen.

Die Filterzentrifugen 10 gemäß den verschiedenen Ausführungsformen können ferner einen Drehantrieb 70 aufweisen, welcher mit der Antriebswelle 110 und der Steuervorrichtung S verbunden ist. Die Steuervorrichtung S kann eingerichtet sein, um den Drehantrieb 70 im Austragebetrieb so zu steuern, dass eine Drehgeschwindigkeit der Filtertrommel 30 im Vergleich zu dem regulären Filterbetrieb um ein mehrfaches kleiner ist. Im Austragebetrieb kann die Drehgeschwindigkeit der Filtertrommel zum Beispiel kleiner/gleich 20% oder kleiner/gleich 10% oder kleiner/gleich 5% der Drehgeschwindigkeit der Filtertrommel im regulären Filterbetrieb sein. Der Drehantrieb 70 weist hier eine Antriebsvorrichtung 72 (zum Beispiel einen elektrischen Antriebsmotor) und eine Übertragungsvorrichtung 74 auf, mit der ein Antriebsdrehmoment der Antriebsvorrichtung 72 auf die Antriebswelle 110 übertragen wird.

Die Steuervorrichtung S ist z.B. derart eingerichtet, dass von ihr der Drehantrieb 70 im Austragebetrieb derart gesteuert wird (z.B. steuerbar ist), dass die Drehzahl der Filtertrommel 30 derart ist, dass das Verhältnis zwischen der auf das in der Filtertrommel 30 vorliegende ausgefilterte Feststoffmaterial F wirkenden Zentrifugalbeschleunigung und der Erdbeschleunigung (bzw. dass die auf das Feststoffmaterial F in der Filtertrommel 30 wirkende G-Kraft) kleiner als eins ist. Dadurch bleibt, anders als im normalen Filterbetrieb, im Austragebetrieb das Feststoffmaterial nicht via Zentrifugalkraft an der Filtertrommelinnenfläche anhaften. Z.B. ist im Austragebetrieb das Verhältnis von Zentrifugalbeschleunigung, die auf das in der Filtertrommel vorliegende ausgefilterte Feststoffmaterial wirkt, zu Erdbeschleunigung (bzw. die auf das Feststoffmaterial in der Filtertrommel wirkende G-Kraft) kleiner gleich 0,5 (bzw. kleiner gleich 0,5G) oder z.B. kleiner gleich 0,1 (bzw. kleiner gleich 0,1G) oder z.B. kleiner gleich 0,05 (z.B. kleiner gleich 0,05G).

Die Austragevorrichtungs-Arme 52 der Feststoffmaterial-Austragevorrichtungen 50 der Filterzentrifugen 10 gemäß den verschiedenen Ausführungsformen der Erfindung sind um eine im Abstand zum freien Armende 54 angeordnete Schwenkachse L2 schwenkbar welche zumindest im Wesentlichen parallel zur Filtertrommellängsachse L1 und versetzt dazu ist (siehe Figuren 1, 4 und 5). Zur Schwenkbewegung und/oder zur oben erläuterten translatorischen Bewegung des Austragevorrichtungs-Arms 52 kann die Feststoffmaterial-Austragevorrichtung 50 einen an die Steuervorrichtung S angeschlossen Antrieb 90 aufweisen, wobei die Steuervorrichtung S eingerichtet ist, um den Antrieb 90 wie hierin beschrieben zu steuern. Der Antrieb 90 kann eine Antriebsvorrichtung 92 (zum Beispiel einen elektrischen Antriebsmotor) und eine Übertragungsvorrichtung 94 aufweisen, die mit der Antriebsvorrichtung 92 und dem Austragevorrichtungs-Arm 52 verbunden ist und über die eine Antriebsbewegung von der Antriebsvorrichtung 92 auf den Austragevorrichtungs-Arm 52 übertragen wird. Durch die Schwenkbewegung kann die Feststoffmaterial-Einlassöffnung 58 (radial bezüglich der Filtertrommellängsachse) in die Nähe der Filtertrommelinnenfläche 32 bewegt werden, sodass das an der Filtertrommelinnenfläche 32 anhaftende, ausgefilterte Feststoffmaterial F durch die Feststoffmaterial-Einlassöffnung 58 in die Feststoffmaterial-Austrageleitung 56 gelangen kann. Der Austragevorrichtungs-Arm 52 kann zum Beispiel ein Hohlkörper (zum Beispiel ein Rohr oder ein Schlauch) mit einem inneren Hohlraum sein und die Feststoffmaterial-Austrageleitung 56 kann von dem Hohlraum des Hohlkörpers gebildet sein.

Im regulären Filterbetrieb kann der Austragevorrichtungs-Arm 52 zum Beispiel so in der Filtertrommel 30 angeordnet sein, dass die Feststoffmaterial-Einlassöffnung 58 zumindest fünfmal so weit von der Filtertrommelinnenfläche 32 entfernt ist wie im Austragebetrieb, um ein Eintreten bzw. Eindringen der Suspension in die Feststoffmaterial-Austrageleitung 56 durch die Feststoffmaterial-Einlassöffnung 58 zumindest zu behindern. Dazu kann der Austragevorrichtungs-Arm 52 zum Beispiel mittels des Antriebs 90 um die Schwenkachse L2 geschwenkt werden.

Die Filterzentrifugen 10 gemäß den diversen Ausführungsformen können, wie in Figur 5 gezeigt, ferner einen Zentrifugendeckel 118 aufweisen, welcher zum Öffnen schwenkbar mit einem Maschinengestell bzw. Maschinengehäuse 116 verbunden ist. An dem Zentrifugendeckel 118 können zum Beispiel eine Suspension-Zuführvorrichtung 120 zum Zuführen der Suspension zu der (bzw. in die) Filtertrommel 30 sowie die Feststoffmaterial-Austragvorrichtung 50 angebracht sein. Im Geschlossen-Zustand des Zentrifugendeckels 118 verschließt dieser die Öffnung 40 der Filtertrommel 30 dicht, wobei die Suspension-Zuführvorrichtung 120 und die Feststoffmaterial-Austragvorrichtung 50 in die Filtertrommel 10 hineinragen, und umgibt gemeinsam mit dem Maschinengestell 116 die Filtertrommel 30, sodass die Filtertrommel 30 in einem zwischen dem Zentrifugendeckel 118 und dem Maschinengestell 116 abgedichtet ausgebildeten Raum 114 angeordnet ist. Ferner ist in dem Maschinengestell 116 auf Höhe eines tiefsten Punktes des Raumes 114 eine mit dem Raum 114 in Verbindung stehende Flüssigkeit-Austragvorrichtung 128 vorgesehen. Das Maschinengestell 116 weist ferner zum Beispiel zwei Trommellager 136 auf, in denen die Antriebswelle 110 gelagert ist (zum Beispiel zumindest im Wesentlichen horizontal), wobei die Filtertrommel 30 mittels der Antriebswelle 110 an dem Maschinengestell 116 zum Beispiel fliegend gelagert angebracht sein kann.

Die Funktionsweise der in Figur 5 gezeigten Filterzentrifuge 10 ist wie folgt. Mittels der Suspension-Zuführvorrichtung 120 wird der Filtertrommel 30 im Rahmen des regulären Filterbetriebs der Filtertrommel 10 die zu filtrierende Suspension zugeführt. Die Filtertrommel 30 wird mittels der Antriebsvorrichtung 70 in Rotation versetzt, wodurch die Suspension via Fliehkraft zur Filtertrommelinnenfläche 32 gezwungen wird. Die Flüssigkeit der Suspension kann das an der Filtertrommelinnenfläche 32 angebrachte Filtertuch 112 sowie die Filtertrommel 30 durch die Drainagebohrungen bzw. -löcher 42 durchdringen und somit aus der Filtertrommel 30 in den Raum 114 geschleudert werden. Die Flüssigkeit wird schließlich mittels der Flüssigkeit-Austragvorrichtung 128 aus dem Raum 114 abgeführt. Das Feststoffmaterial F der Suspension wird durch das Filtermedium 112 zurückgehalten und dadurch aus der Suspension ausgefiltert. Schließlich wird bei Erreichen eines ausreichenden Ausschleuderns der Flüssigkeit das an dem Filtertuch 112 als Filterkuchen anliegende, ausgefilterte Feststoffmaterial F im Rahmen des Austragebetriebs der Filterzentrifuge 10 von dem Filtertuch 112 mittels der Feststoffmaterial-Austragvorrichtung 50 unter gesteuertem Drehen der Filtertrommel 30 und unter gesteuertem Bewegen des Austragevorrichtungs-Arms 52 entfernt und mittels der Feststoffmaterial-Austragvorrichtung 50 aus der Filtertrommel 30 ausgetragen. Der reguläre Filterbetrieb unterscheidet sich von dem Austragebetrieb zumindest dadurch, dass die Drehgeschwindigkeit bzw. die Drehzahl der Filtertrommel 30 im Austragebetrieb (zum Beispiel um ein mehrfaches) kleiner ist als im regulären Filterbetrieb und die Position der Feststoffmaterial-Einlassöffnung 58 in der Filtertrommel 30 verschieden ist. Im Austragebetrieb ist die Feststoffmaterial-Einlassöffnung 58 in die Nähe der Filtertrommelinnenfläche bewegt, um das an der Filtertrommelinnenfläche 32 anhaftende Feststoffmaterial F aufnehmen zu können. Im regulären Filterbetrieb ist die Feststoffmaterial-Einlassöffnung 58 zum Beispiel in die Nähe der Filtertrommellängsachse L1 bewegt, um ein Eindringen der zu filtrierenden Suspension in die Feststoffmaterial-Austrageleitung 56 zumindest im Wesentlichen vollständig zu verhindern/unterbinden.

Die vorhergehende Beschreibung von spezifischen beispielgebenden Ausführungsformen der vorliegenden Erfindung wurde präsentiert zum Zwecke der Illustration und Beschreibung. Sie soll nicht erschöpfend sein oder die Erfindung auf die offenbarten präzisen Formen beschränken, und selbstverständlich sind viele Modifikationen und Variationen im Lichte der obigen Lehre möglich. Die beispielgebenden Ausführungsformen wurden ausgewählt und beschrieben, um bestimmte Prinzipien der Erfindung und ihre praktische Anwendung zu erläutern, um hierdurch Fachleuten zu ermöglichen, verschiedene beispielgebende Ausführungsformen der vorliegenden Erfindung sowie verschiedene Alternativen und Modifikationen davon herzustellen und anzuwenden. Es ist beabsichtigt, dass der Umfang der Erfindung durch die hieran angehängten Ansprüche definiert wird.

## Patentansprüche

1. Filterzentrifuge (10) zum Ausfiltern eines Feststoffmaterials (F) aus einer Suspension, die von dem Feststoffmaterial (F) und einer Flüssigkeit gebildet ist, mit
einer Filtertrommel (30), welche eine Filtertrommelinnenfläche (32) und eine Filtertrommellängsachse (L1) definiert und welche um die Filtertrommellängsachse (L1) drehbar ist, und
einer Feststoffmaterial-Austragevorrichtung (50) zum Austragen des ausgefilterten Feststoffmaterials (F) aus der Filtertrommel (30) im Rahmen eines Austragebetriebs der Filterzentrifuge (10),
wobei die Feststoffmaterial-Austragevorrichtung (50) aufweist
einen Austragevorrichtungs-Arm (52) mit einem freien Armende (54), und
eine Feststoffmaterial-Austrageleitung (56), welche an dem Arm (52) ausgebildet ist und über welche das ausgefilterte Feststoffmaterial (F) aus der Filtertrommel (30) herausführbar ist und welche eine Feststoffmaterial-Einlassöffnung (58) hat, welche benachbart zu dem freien Armende (54) angeordnet ist und über welche das ausgefilterte Feststoffmaterial (F) von der Filtertrommel (30) in die Feststoffmaterial-Austrageleitung (56) gelangen kann,
wobei der Austragevorrichtungs-Arm (52) um eine im Abstand zum freien Armende (54) angeordnete Schwenkachse (L2) schwenkbar ist, welche zumindest im Wesentlichen parallel zur Filtertrommellängsachse (L1) und versetzt dazu ist, wobei der Austragevorrichtungs-Arm (52) gesteuert schwenkbewegbar eingerichtet ist, sodass im Austragebetrieb die Feststoffmaterial-Einlassöffnung (58) mittels einer Schwenkbewegung des Austragevorrichtungs-Arms (52) in die Nähe der Filtertrommelinnenfläche (32) bewegbar ist, um das an der Filtertrommelinnenfläche (32) anhaftende, ausgefilterte Feststoffmaterial (F) aufnehmen zu können, und
wobei die Feststoffmaterial-Austragevorrichtung (50) ferner zumindest eine Düse (60) aufweist, um das ausgefilterte Feststoffmaterial (F) im Austragebetrieb mit einem Gas zu beaufschlagen, welche benachbart zu der Feststoffmaterial-Einlassöffnung (58) in der Feststoffmaterial-Austrageleitung (56) angeordnet ist und welche eine Gasaustrittsöffnung (62) aufweist, welche im Austragebetrieb in Richtung auf die Filtertrommelinnenfläche (32) ausgerichtet ist, um im Austragebetrieb das an der Filtertrommelinnenfläche (32) anhaftende, ausgefilterte Feststoffmaterial (F) mit dem Gas beaufschlagen zu können, wobei die Filterzentrifuge (10) ferner aufweist eine Druckdifferenz-Erzeugungsvorrichtung (130) zum Erzeugen einer Druckdifferenz zwischen einem Inneren der Düse (60) und der Feststoffmaterial-Einlassöffnung (58), derart dass der Druck in der Düse (60) größer ist als an der Feststoffmaterial-Einlassöffnung (58), und zum Erzeugen einer Druckdifferenz zwischen der Feststoffmaterial-Einlassöffnung (58) und einem Inneren der Feststoffmaterial-Austrageleitung (56), derart dass der Druck in der Feststoffmaterial-Austrageleitung (56) kleiner ist als in einer die Feststoffmaterial-Einlassöffnung (58) umgebenden äußeren Umgebung, wobei die Druckdifferenz-Erzeugungsvorrichtung (130) derart eingerichtet ist, dass von ihr im Austragebetrieb die besagten Druckdifferenzen derart eingestellt sind, dass der Volumenstrom in der Gasaustrittsöffnung (62) kleiner ist als der Volumenstrom in der Feststoffmaterial-Einlassöffnung (58),
**dadurch gekennzeichnet, dass**
sich die Feststoffmaterial-Einlassöffnung (58) in Richtung der Filtertrommellängsachse (L1) über weniger als ein Fünftel der gesamten Länge der Filtertrommelinnenfläche (32) erstreckt,
wobei der Austragevorrichtungs-Arm (52) ferner gesteuert translatorisch bewegbar eingerichtet ist, sodass im Austragebetrieb die Feststoffmaterial-Einlassöffnung (58) mittels einer translatorischen Bewegung des Austragevorrichtungs-Arms (52) in Richtung parallel zur Filtertrommellängsachse (L1) bewegbar ist, um die Feststoffmaterial-Einlassöffnung (58) parallel zur Filtertrommellängsachse (L1) zu verschieben.

2. Filterzentrifuge (10) gemäß Anspruch 1, wobei die zumindest eine Düse (60) zumindest im Wesentlichen zentral bezüglich der Feststoffmaterial-Einlassöffnung (58) an dieser angeordnet ist, sodass die Gasaustrittsöffnung (62) zumindest im Wesentlichen zentral bezüglich der Feststoffmaterial-Einlassöffnung (58) angeordnet ist.

3. Filterzentrifuge (10) gemäß Anspruch 1 oder 2, wobei die Feststoffmaterial-Austragevorrichtung (50) ferner eine Gaszuführleitung (64) aufweist, über welche der zumindest einen Düse (60) das Gas zugeführt wird und welche mit der zumindest einen Düse (60) verbunden ist und welche bezüglich eines Querschnitts der Feststoffmaterial-Austrageleitung (56) zumindest im Wesentlichen zentral in der Feststoffmaterial-Austrageleitung (56) angeordnet ist.

4. Filterzentrifuge (10) gemäß einem der Ansprüche 1 bis 3, wobei die Feststoffmaterial-Austrageleitung (56) einen trichterförmigen Feststoffmaterial-Aufnahmeabschnitt (66) aufweist, welcher sich zur Feststoffmaterial-Einlassöffnung (58) hin trichterförmig vergrößert und in dieser ausmündet, wobei optional die zumindest eine Düse (60) bezüglich eines Querschnitts des Feststoffmaterial-Aufnahmeabschnitts (66) zumindest im Wesentlichen zentral in dem Feststoffmaterial-Aufnahmeabschnitt (66) angeordnet ist.

5. Filterzentrifuge (10) gemäß einem der Ansprüche 1 bis 4,
wobei sich die Feststoffmaterial-Einlassöffnung (58) in Richtung der Filtertrommellängsachse (L1) zumindest im Wesentlichen über die gesamte Länge der Filtertrommelinnenfläche (32) erstreckt, und
wobei eine Mehrzahl von Düsen (60) in Richtung der Filtertrommellängsachse (L1) im Abstand voneinander und benachbart zu der Feststoffmaterial-Einlassöffnung (58) in der Feststoffmaterial-Austrageleitung (56) angeordnet sind, oder
wobei sich die Gasaustrittsöffnung (62) der zumindest einen Düse (60) in Richtung der Filtertrommellängsachse (L1) zumindest im Wesentlichen über die gesamte Länge der Filtertrommelinnenfläche (32) erstreckt.

6. Filterzentrifuge (10) gemäß einem der Ansprüche 1 bis 5, wobei der Austragevorrichtungs-Arm (52) ein Hohlkörper mit einem inneren Hohlraum ist und die Feststoffmaterial-Austrageleitung (56) von dem Hohlraum des Hohlkörpers gebildet ist.

7. Filterzentrifuge (10) gemäß einem der Ansprüche 1 bis 6, wobei die Filtertrommellängsachse (L1) zumindest im Wesentlichen horizontal angeordnet ist, und wobei im Austragebetrieb die in die Nähe der Filtertrommelinnenfläche (32) bewegte Feststoffmaterial-Einlassöffnung (58) bezüglich der Filtertrommellängsachse (L1) im unteren Drittel der Filtertrommel (30) angeordnet ist.

## Claims

1. Filter centrifuge (10) for filtering a solid material (F) out of a suspension formed by the solid material (F) and a liquid, including
a filter drum (30) which defines a filter drum inner surface (32) and a filter drum longitudinal axis (L1) and which is rotatable about the filter drum longitudinal axis (L1), and
a solid material discharge device (50) for discharging the filtered-out solid material (F) from the filter drum (30) in the context of a discharge operation of the filter centrifuge (10),
wherein the solid material discharge device (50) comprises
a discharge device arm (52) having a free arm end (54), and
a solid material discharge line (56) which is formed on the arm (52) and through which the filtered-out solid material (F) can be led out of the filter drum (30) and which has a solid material inlet opening (58) which is disposed adjacent to the free arm end (54) and through which the filtered-out solid material (F) can get from the filter drum (30) into the solid material discharge line (56),
wherein the discharge device arm (52) is pivotable about a pivot axis (L2) arranged at a distance from the free arm end (54), which is at least substantially parallel to the filter drum longitudinal axis (L1) and offset therefrom, wherein the discharge device arm (52) is configured to be pivotably movable in a controlled way, so that, in discharge operation, the solid material inlet opening (58) is movable near the filter drum inner surface (32) by means of a pivoting movement of the discharge device arm (52), in order to be able to receive the filtered-out solid material (F) adhering to the filter drum inner surface (32), and
wherein the solid material discharge device (50) further comprises at least one nozzle (60) for applying a gas to the filtered-out solid material (F) during discharge operation, which is arranged adjacent to the solid material inlet opening (58) in the solid material discharge line (56) and which has a gas outlet opening (62), which is oriented in the direction of the filter drum inner surface (32) during discharge operation, in order to be able to apply the gas to the filtered-out solid material (F) adhering to the filter drum inner surface (32) during discharge operation, the filter centrifuge (10) further comprising a pressure difference generating device (130) for generating a pressure difference between an interior of the nozzle (60) and the solid material inlet opening (58), such that the pressure in the nozzle (60) is greater than at the solid material inlet opening (58), and for creating a pressure difference between the solid material inlet opening (58) and an interior of the solid material discharge line (56), such that the pressure in the solid material discharge line (56) is lower than in an external environment surrounding the solid material inlet opening (58), wherein the pressure difference generating device (130) is arranged such that said pressure differences are set by it in the discharge operation in such a way that the volume flow in the gas outlet opening (62) is smaller than the volume flow in the solid material inlet opening (58),
**characterized in that**
the solid material inlet opening (58) extends in the direction of the filter drum longitudinal axis (L1) over less than one fifth of the entire length of the filter drum inner surface (32),
wherein the discharge device arm (52) is further configured for translational movement in a controlled way, so that in discharge operation the solid material inlet opening (58) is movable by means of a translational movement of the discharge device arm (52) in a direction parallel to the filter drum longitudinal axis (L1), to displace the solid material inlet opening (58) parallel to the filter drum longitudinal axis (L1).

2. Filter centrifuge (10) according to claim 1, wherein the at least one nozzle (60) is disposed at least substantially centrally with respect to the solid material inlet opening (58) thereon, such that the gas outlet opening (62) is disposed at least substantially centrally with respect to the solid material inlet opening (58).

3. Filter centrifuge (10) according to claim 1 or 2, wherein the solid material discharge device (50) further comprises a gas supply line (64) through which the gas is supplied to the at least one nozzle (60) and which is connected to the at least one nozzle (60) and which is arranged at least substantially centrally in the solid material discharge line (56) with respect to a cross-section of the solid material discharge line (56).

4. Filter centrifuge (10) according to any one of claims 1 to 3, wherein the solid material discharge line (56) has a funnel-shaped solid material receiving portion (66) which increases in a funnel shape toward the solid material inlet opening (58) and opens into the same, wherein optionally the at least one nozzle (60) is disposed at least substantially centrally in the solid material receiving portion (66) with respect to a cross-section of the solid material receiving portion (66).

5. Filter centrifuge (10) according to any one of claims 1 to 4,
wherein the solid material inlet opening (58) extends in the direction of the filter drum longitudinal axis (L1) at least substantially over the entire length of the filter drum inner surface (32), and
wherein a plurality of nozzles (60) are arranged in the direction of the filter drum longitudinal axis (L1) at a distance from each other and adjacent to the solid material inlet opening (58) in the solid material discharge line (56), or
wherein the gas outlet opening (62) of the at least one nozzle (60) extends in the direction of the filter drum longitudinal axis (L1) at least substantially over the entire length of the filter drum inner surface (32).

6. Filter centrifuge (10) according to any one of claims 1 to 5, wherein the discharge device arm (52) is a hollow body having an internal cavity and the solid material discharge line (56) is formed by the cavity of the hollow body.

7. Filter centrifuge (10) according to any one of claims 1 to 6, wherein the filter drum longitudinal axis (L1) is arranged at least substantially horizontally, and wherein in discharge operation the solid material inlet opening (58) moved near the filter drum inner surface (32) is arranged in the lower third of the filter drum (30) with respect to the filter drum longitudinal axis (L1).

## Revendications

1. Centrifugeuse filtrante (10) destinée à filtrer une matière solide (F) à partir d'une suspension qui est formée de la matière solide (F) et d'un liquide, avec un tambour filtrant (30), lequel définit une surface intérieure de tambour filtrant (32) et un axe longitudinal de tambour filtrant (L1), et lequel peut tourner autour de l'axe longitudinal de tambour filtrant (L1), et
un dispositif d'extraction de matière solide (50) destiné à extraire la matière solide (F) filtrée à partir du tambour filtrant (30) dans le cadre d'un mode extraction de la centrifugeuse filtrante (10),
le dispositif d'extraction de matière solide (50) comportant
un bras de dispositif d'extraction (52) avec une extrémité de bras (54) libre, et
une conduite d'extraction de matière solide (56), laquelle est constituée sur le bras (52) et par le biais de laquelle la matière solide (F) filtrée peut être évacuée du tambour filtrant (30), et laquelle a une ouverture d'entrée de matière solide (58) laquelle est disposée au voisinage de l'extrémité de bras (54) libre et par le biais de laquelle la matière solide (F) filtrée peut passer du tambour filtrant (30) à la conduite d'extraction de matière solide (56),
le bras de dispositif d'extraction (52) pouvant pivoter autour d'un axe de pivotement (L2), disposé à distance de l'extrémité de bras (54) libre, lequel est au moins essentiellement parallèle à l'axe longitudinal de tambour filtrant (L1) et décalé par rapport à cet axe, le bras de dispositif d'extraction (52) étant agencé de façon mobile en pivotement et de façon commandée de sorte que, dans le mode extraction, l'ouverture d'entrée de matière solide (58) peut être rapprochée de la surface intérieure de tambour filtrant (32) au moyen d'un mouvement de pivotement du bras de dispositif d'extraction (52) pour pouvoir recevoir la matière solide (F) filtrée qui adhère à la surface intérieure de tambour filtrant (32), et
le dispositif d'extraction de matière solide (50) comportant en outre au moins une buse (60) pour, dans le mode extraction, exposer la matière solide (F) filtrée à un gaz, laquelle buse est disposée au voisinage de l'ouverture d'entrée de matière solide (58) dans la conduite d'extraction de matière solide (56) et laquelle comporte une ouverture de sortie de gaz (62) qui, dans le mode extraction, est orientée en direction de la surface intérieure de tambour filtrant (32) pour, dans le mode extraction, pouvoir exposer au gaz la matière solide (F) filtrée qui adhère à la surface intérieure de tambour filtrant (32), la centrifugeuse filtrante (10) comportant en outre un dispositif de production de différence de pression (130) destiné à produire une différence de pression entre un intérieur de la buse (60) et l'ouverture d'entrée de matière solide (58) de sorte que la pression dans la buse (60) est plus élevée qu'au niveau de l'ouverture d'entrée de matière solide (58), et destiné à produire une différence de pression entre l'ouverture d'entrée de matière solide (58) et un intérieur de la conduite d'extraction de matière solide (56) de sorte que la pression dans la conduite d'extraction de matière solide (56) est moins élevée que dans un environnement extérieur environnant l'ouverture d'entrée de matière solide (58), le dispositif de production de différence de pression (130) étant agencé de telle sorte que, dans le mode extraction, il règle lesdites différences de pression de sorte que le flux volumique dans l'ouverture de sortie de gaz (62) est plus faible que le flux volumique dans l'ouverture d'entrée de matière solide (58),
**caractérisée en ce que**
l'ouverture d'entrée de matière solide (58) s'étend en direction de l'axe longitudinal de tambour filtrant (L1) sur moins d'un cinquième de la longueur totale de la surface intérieure de tambour filtrant (32),
le bras de dispositif d'extraction (52) étant en outre agencé de façon mobile en translation et de façon commandée de sorte que, dans le mode extraction, l'ouverture d'entrée de matière solide (58) peut être déplacée au moyen d'un mouvement de translation du bras de dispositif d'extraction (52) dans une direction parallèle à l'axe longitudinal de tambour filtrant (L1) afin de faire coulisser l'ouverture d'entrée de matière solide (58) parallèlement à l'axe longitudinal de tambour filtrant (L1).

2. Centrifugeuse filtrante (10) selon la revendication 1, la buse (60) au moins au nombre de un étant disposée sur l'ouverture d'entrée de matière solide (58) au moins essentiellement de façon centrale par rapport à celle-ci de sorte que l'ouverture de sortie de gaz (62) est disposée au moins essentiellement de façon centrale par rapport à l'ouverture d'entrée de matière solide (58).

3. Centrifugeuse filtrante (10) selon la revendication 1 ou 2, le dispositif d'extraction de matière solide (50) comportant en outre une conduite d'amenée de gaz (64) par le biais de laquelle le gaz est acheminé à la buse (60) au moins au nombre de un, et laquelle est raccordée à la buse (60) au moins au nombre de un, et laquelle est, par rapport à une section transversale de la conduite d'extraction de matière solide (56), disposée au moins essentiellement de façon centrale dans la conduite d'extraction de matière solide (56).

4. Centrifugeuse filtrante (10) selon l'une des revendications 1 à 3, la conduite d'extraction de matière solide (56) comportant un tronçon de réception de matière solide (66) en forme d'entonnoir qui s'agrandit en forme d'entonnoir vers l'ouverture d'entrée de matière solide (58) et débouche dans celle-ci, la buse (60) au moins au nombre de un étant optionnellement disposée au moins essentiellement de façon centrale dans le tronçon de réception de matière solide (66) par rapport à une section transversale du tronçon de réception de matière solide (66).

5. Centrifugeuse filtrante (10) selon l'une des revendications 1 à 4,
l'ouverture d'entrée de matière solide (58) s'étendant en direction de l'axe longitudinal de tambour filtrant (L1) au moins essentiellement sur toute la longueur de la surface intérieure de tambour filtrant (32), et
une pluralité de buses (60) étant disposées en direction de l'axe longitudinal de tambour filtrant (L1) à distance les unes des autres et au voisinage de l'ouverture d'entrée de matière solide (58) dans la conduite d'extraction de matière solide (56), ou
l'ouverture de sortie de gaz (62) de la buse (60) au moins au nombre de un s'étendant en direction de l'axe longitudinal de tambour filtrant (L1) au moins essentiellement sur toute la longueur de la surface intérieure de tambour filtrant (32).

6. Centrifugeuse filtrante (10) selon l'une des revendications 1 à 5, le bras de dispositif d'extraction (52) étant un corps creux avec une cavité intérieure, et la conduite d'extraction de matière solide (56) étant formée par la cavité du corps creux.

7. Centrifugeuse filtrante (10) selon l'une des revendications 1 à 6, l'axe longitudinal de tambour filtrant (L1) étant disposé au moins essentiellement horizontalement, et l'ouverture d'entrée de matière solide (58) rapprochée, dans le mode extraction, de la surface intérieure de tambour filtrant (32) étant disposée dans le tiers inférieur du tambour filtrant (30) par rapport à l'axe longitudinal de tambour filtrant (L1).
